# EUROPÄISCHE PATENTSCHRIFT

(11) **EP 4 006 377 B1**
(45) Veröffentlichungstag und Bekanntmachung des Hinweises auf die Patenterteilung: **26.07.2023**
(21) Anmeldenummer: 21205411.8
(22) Anmeldetag: 28.10.2021
(51) Int. Cl.: F16G 11/04, B60P 7/00, F16B 45/00, F16G 11/12

(54) **FIXIER- UND ABSPANNVORRICHTUNG SOWIE BAUKASTENSYSTEM**
FIXING AND CLAMPING DEVICE AND MODULAR SYSTEM
DISPOSITIF DE FIXATION ET D'HAUBANAGE, AINSI QUE SYSTÈME MODULAIRE

(30) Priorität: 29.10.2020 DE 102020128514
(43) Veröffentlichungstag der Anmeldung: 01.06.2022
(73) Patentinhaber: ModulFix GmbH, 8280 Kreuzlingen (CH)
(72) Erfinder: Kopp, Martin, 81541 München (DE); Kopp, Michael, 8280 Kreuzlingen (CH)
(74) Vertreter: Prinz & Partner mbB

(56) Entgegenhaltungen:
- FR-A- 666 307
- US-A- 3 151 212
- US-A- 6 012 204

## Beschreibung

Die Erfindung betrifft eine Fixier- und Abspannvorrichtung zum Fixieren eines Gegenstandes sowie ein Baukastensystem mit einer solchen Fixier- und Abspannvorrichtung.

Um beispielsweise Gepäckstücke in einem Kofferraum oder auf einem Gepäckträger oder einer Ladepritsche eines Fahrzeugs zu fixieren oder abzuspannen, sind aus dem Stand der Technik Gummispanner bekannt, die ein elastisches Zugmittel aufweisen und an denen endseitig jeweils ein Haken oder ein Karabiner angeordnet ist. Diese Gummispanner sind auch als Gepäckspanner bekannt.

Allerdings passen die Haken oder Karabiner oftmals nicht perfekt zum Einsatzfall und es muss gegebenenfalls umständlich eine Befestigungsmöglichkeit gesucht werden, um die Haken oder Karabiner einhängen zu können.

Darüber hinaus ist es auch umständlich, die Länge der Gummispanner anzupassen. Beispielsweise muss ein Teil des Zugmittels abgeknotet werden. Dabei beeinflusst der Knoten die Zugcharakteristik des Gummispanners.

Die US 3 151 212 A offenbart als nächstkommender Stand der Technik eine Fixier- und Abspannvorrichtung mit einem Grundkörper, durch den sich das Zugmittel von einem radialen Schlitz ausgehend axial erstreckt.

Es ist die Aufgabe der Erfindung, die aus dem Stand der Technik bekannten Nachteile zu beseitigen und eine sehr universell einsetzbare Fixier- und Abspannvorrichtung zu schaffen.

Die Aufgabe der Erfindung wird gelöst durch eine Fixier- und Abspannvorrichtung zum Fixieren eines Gegenstandes, die einen Grundkörper, ein Adapterelement und ein seitlich auslenkbares, längliches Zugmittel hat. Das Zugmittel ist durch eine axiale Durchgangsöffnung im Grundkörper durchführbar. Der Grundkörper umschließt das Zugmittel am Umfang vollständig und ist entlang des Zugmittels verschiebbar. Außerdem sind der Grundkörper und das Adapterelement werkzeugfrei voneinander komplett zerstörungsfrei lösbar und durch axiales Aufeinanderschieben miteinander koppelbar. Der Grundkörper weist einen seitlichen, von außen radial zur Durchgangsöffnung durchgehenden Schlitz auf, durch den das Zugmittel durchführbar ist, wobei das Adapterelement in einem montierten Zustand am Grundkörper den Schlitz zumindest teilweise verschließt. Der Grundkörper und/oder das Adapterelement sind hülsenförmig. Auf diese Weise werden Kanten an der Außenseite vermieden, die einen Gegenstand verkratzen könnten.Zusätzlich ist das Adapterelement im montierten Zustand am Grundkörper befestigt sein und klammt das Zugmittel im montierten Zustand im Schlitz. Dabei weist das Adapterelement eine Durchgangsöffnung auf, die ein Befestigungsmittel für einen Aufsatz bildet.

Die Erfindung beruht auf dem Grundgedanken, gleichzeitig das Zugmittel verkürzen zu können und verschiedene Adapterelemente an der gegebenenfalls verkürzten Seite des Zugmittels anbringen zu können. Um diese Flexibilität und auch Modularität zu gewährleisten, ist das Adapterelement mit dem Grundkörper koppelbar und das Zugmittel ist durch den Schlitz seitlich aus dem Inneren des Grundkörpers herausführbar. Somit kann eine individuelle Anpassung der Adapter und der Länge des Zugmittels der Fixier- und Abspannvorrichtung an die entsprechende Befestigungssituation vorgenommen werden.

Unter der Eignung des Zugmittels, durch die Durchgangsöffnung durchgeführt zu werden, ist zu verstehen, dass das Zugmittel an sich durch die Durchgangsöffnung durchgeführt werden kann.

So kann beispielsweise nur ein Ende des Zugmittels durch die Durchgangsöffnung durchführbar sein. An dem anderen Ende kann dann eine Verdickung oder ein Befestigungsmittel angeordnet sein, sodass das Zugmittel nicht vollständig durch den Grundköper gezogen werden kann.

Für die Fixier- und Abspannvorrichtung sind eine Vielzahl an Einsatzmöglichkeiten denkbar. Zum Beispiel kann im Outdoor-Bereich ein Zelt oder ein Vorzelt mittels der Fixier- und Abspannvorrichtung befestigt werden.

Des Weiteren kann eine Plane über einen zu schützenden Gegenstand gelegt werden, wie einen Holzstapel, ein Möbelstück oder ein Fahrzeug, und die Plane kann mittels der Abspann- und Fixiervorrichtung über diesen Gegenstand abgespannt werden. Somit fixiert die Fixier- und Abspannvorrichtung die Plane, und die Plane kann wiederum den zu schützenden Gegenstand vor Regen und/oder Sonne wirksam schützen.

Außerdem ist es denkbar, dass mittels der Abspann- und Fixiervorrichtung ein zu transportierender Gegenstand, wie ein Rucksack, eine Tasche oder ein Koffer fixiert wird, beispielsweise auf einem Gepäckträger/Gepäckkorb eines Fahrrads, eines Motorrads oder allgemein an oder in einem Fahrzeug.

Darüber hinaus kann durch die Abspann- und Fixiervorrichtung ein Stand-Up-Board und/oder ein Stand-Up-Paddel auf einem entsprechenden Transportwagen befestigt werden. Neben den aufgeführten Beispielen sind natürlich noch viele weitere Einsatzmöglichkeiten denkbar.

Das Zugmittel der Fixier- und Abspannvorrichtung kann in Längsrichtung elastisch sein. Auf diese Weise können auf den Gegenstand einwirkende Kraftspitzen (beispielsweise durch das Überfahren einer Bremsschwelle oder durch auftretende Windböen) absorbiert werden.

Beispielsweise besteht das Zugmittel aus einem in Längsrichtung stark dehnbaren Kunststoff, z.B. einem Gummi.

Alternativ kann das Zugmittel auch ein in Längsrichtung starr ausgebildetes Band, Seil oder eine Kette sein.

Ein Aspekt der Erfindung sieht vor, dass sich der Schlitz von einer Stirnseite des Grundkörpers aus, axial über eine Teillänge des Grundkörpers erstreckt. Auf diese Weise kann das Adapterelement über eine gewisse axiale Länge am Grundkörper befestigt werden, wobei das Adapterelement über diese Länge sich mit dem Grundkörper überschneidet. Zudem kann das Zugmittel über den Schlitz aus dem Grundkörper seitlich herausgeführt werden, womit es dem Adapterelement beim axialen Ankoppeln nicht im Wege steht.

Beispielsweise erstreckt sich der Schlitz über zumindest 20 %, insbesondere 40 % der Längsrichtung des Grundkörpers.

Der Schlitz kann ausgehend von der Stirnseite des Grundkörpers konisch zulaufend sein. Auf diese Weise wird das Einführen des Zugmittels in den Schlitz vereinfacht, und das Zugmittel wird sicher in den immer enger werdenden Schlitz geklemmt.

Es ist denkbar, dass der Schlitz in einem ersten Abschnitt eine erste Steigung aufweist und in einem zweiten Abschnitt eine zweite Steigung, wobei die Steigung des zweiten Abschnitts steiler ist als die des ersten Abschnitts. Dabei ist der erste Abschnitt derjenige, der näher zur Stirnseite des Grundkörpers ist, von der aus sich der Schlitz erstreckt.

Mit anderen Worten weist der Schlitz also in dem ersten Abschnitt einen ersten Winkel zur Axialrichtung und in dem zweiten Abschnitt einen zweiten Winkel zur Axialrichtung auf, wobei der Winkel des ersten Abschnitts größer ist. Auf diese Weise wird das Einführen des Zugmittels in den Schlitz vereinfacht.

In einer Ausgestaltung der Erfindung weist der Grundkörper einen zweiten Schlitz auf. In einem montierten Zustand des Adapterelements am Grundkörper kann das Adapterelement beide Schlitze am Grundkörper zumindest teilweise verschließen. Auf diese Weise können beispielsweise beide Enden des Zugmittels in jeweils einen Schlitz eingeführt werden und durch das Einführen des Zugmittels in den Schlitz, die Länge des Zugmittels an beiden Enden eingestellt werden.

Alternativ ist es auch denkbar, dass in einen oder in beide Schlitze jeweils ein weiteres Zugmittel, beispielsweise ein Zugmittel einer weiteren Fixier- und Abspannvorrichtung eingeführt wird.

Weiterhin können in einen Schlitz auch das Zugmittel und das weitere Zugmittel oder mehrere weitere Zugmittel eingeführt werden.

Dabei können sich die Schlitze diametral gegenüberliegen.

Um ein schnelles Lösen und Befestigen des Adapterelements an dem Grundkörper zu ermöglichen, kann der Grundkörper ein Außengewinde aufweisen und das Adapterelement ein Innengewinde, wobei das Adapterelement mittels des Innengewindes auf das Außengewinde des Grundkörpers aufschraubbar ist.

Alternativ ist es auch denkbar, dass das Adapterelement ein Außengewinde aufweist und der Grundkörper ein Innengewinde.

An der Ausbildung der Fixier- und Abspannvorrichtung mit einem Gewinde ist vorteilhaft, dass die Länge, über die das Adapterelement mit dem Grundkörper in Eingriff steht, variiert werden kann. Somit kann die auf das Zugmittel einwirkende Zugspannung fein eingestellt werden. Ferner kann die Verschraubung auch so weit erfolgen, dass das Adapterelement das Zugmittel im Schlitz axial klemmt, indem es den Schlitz stärker schließt.

Im Allgemeinen sind natürlich auch andere werkzeugfrei lösbare Befestigungsmittel zum Befestigen des Adapterelements am Grundkörper denkbar. Beispielsweise kann das Adapterelement mit dem Grundkörper verclipst werden.

In einer Ausgestaltung der Erfindung läuft das Zugmittel axial durch das Adapterelement hindurch. Dies ermöglicht eine symmetrische Krafteinleitung in den Grundkörper.

Insbesondere ist dabei eine Durchgangsöffnung des Adapterelements konzentrisch zur Durchgangsöffnung des Grundkörpers.

Mit anderen Worten bildet die Durchgangsöffnung eine Befestigungsmöglichkeit für den Aufsatz am Adapterelement. Somit können Aufsätze, wie ein Haken, ein Klettband, ein Saugnapf, eine Öse oder ein Magnet in einfacher Weise am Adapterelement befestigt werden.

Um einen axialen Anschlag bereitzustellen, kann der Grundkörper oder das Adapterelement an einer Stirnseite einen axial vorstehenden Steg aufweisen.

Insbesondere ist der Steg am Grundkörper angeordnet, falls dieser das Außengewinde aufweist.

Der Steg steht zum Beispiel vom Grundkörper axial hervor und ist in Umfangsrichtung im Wesentlichen umlaufend. Das heißt, dass der Steg bis auf den Bereich, in dem der Grundkörper geschlitzt ist, in Umfangsrichtung umlaufend ist.

Um eine symmetrische Krafteinleitung der auf das Zugmittel wirkenden Zugkraft in den Grundkörper zu gewährleisten, kann die Durchgangsöffnung zentrisch angeordnet sein.

In einer Ausgestaltung der Erfindung kann der Grundkörper innenseitig im Bereich des Schlitzes eine Verdickung aufweisen, die sich über die gesamte Länge des Schlitzes erstreckt. Durch die Verdickung wird die Stabilität des Grundkörpers im Bereich des Schlitzes erhöht.

Es ist denkbar, dass auf beiden Seiten des Schlitzes jeweils eine Verdickung angeordnet ist.

Außerdem kann sich die Verdickung auch über die gesamte Länge des Grundkörpers erstrecken.

Im Allgemeinen kann der Grundkörper auch weitere zur Verbesserung der Stabilität dienenden Verdickungen aufweisen, die keinem Schlitz zugeordnet sind.

In einer Ausführungsform der Erfindung klemmt das Adapterelement im montierten Zustand das Zugmittel im Schlitz. Auf diese Weise kann zum einen eine Längeneinstellung des Zugmittels vorgenommen werden und/oder größere Zugkräfte auf das Zugmittel durch den Grundkörper und das Adapterelement aufgenommen werden.

Auf der dem Grundkörper zugeordneten Stirnseite des Adapterelements kann eine Fase ausgebildet sein. Auf diese Weise wird, falls das Zugmittel zwischen Adapterelement und Grundkörper eingeklemmt wird, eine scharfe Kante am Adapterelement vermieden. Weiterhin wird durch die Fase ein geführtes Aufsetzen des Adapterelements auf den Grundkörper ermöglicht.

Insbesondere verläuft das Adapterelement seitlich der Außenseite des Grundkörpers über den Grundkörper hinweg und verdeckt dabei einen Abschnitt des Schlitzes.

In einer Ausführungsform der Erfindung weist das Zugmittel endseitig ein Befestigungsmittel, das nicht lösbar am Zugmittel befestigt ist. Auf diese Weise kann die Fixier- und Abspannvorrichtung auch in einer Y-Konfiguration verwendet werden. Hierfür wird das Ende des Zugmittels, an dem das Befestigungsmittel angeordnet ist, durch den Schlitz aus dem Grundkörper geführt und eine Last an dem Befestigungsmittel befestigt. Um die Y-Konfiguration zu vervollständigen bedarf es der axialen Befestigung eines weiteren Adapterelements auf dem Grundkörper.

Im Allgemeinen kann auch anstatt des Befestigungsmittels ein weiteres Adapterelement an dem Zugmittel oder das weitere Adapterelement am Befestigungsmittel befestigt sein.

Beispielsweise ist das Befestigungsmittel eine Öse.

Zur Längeneinstellung des Zugmittels kann am Grundkörper außenseitig eine Klemmeinheit angeordnet sein. Dabei ist die Klemmeinheit dazu ausgebildet, eine Bewegung des Zugmittels in Längsrichtung zu unterbinden.

Die Klemmeinheit ist zum Beispiel an den Grundkörper angeformt.

Beispielsweise ist der gesamte Grundkörper ein Spritzgussteil aus Kunststoff.

Gleichfalls kann das Adapterelement ein Spritzgussteil aus Kunststoff sein.

Im Allgemeinen kann der gesamte Grundkörper und/oder das Adapterelement auch aus einem Metall sein, beispielsweise aus Aluminium.

Es ist denkbar, dass die Anzahl an Klemmeinheiten der Anzahl an Schlitzen entspricht.

Falls der Grundkörper also zwei Schlitze aufweist, so können auch zwei Klemmeinheiten am Grundkörper angeordnet sein.

In einer Ausgestaltung der Erfindung weist die Klemmeinheit eine Klemmrinne auf, in welche das Zugmittel wahlweise einführbar ist, um darin geklemmt zu werden. Dies ermöglicht eine schnelle Längeneinstellung des Zugmittels direkt am Grundkörper.

Dabei kann die Klemmrinne in Seitenansicht gesehen an den Schlitz angrenzen und zu ihm ausgerichtet sein. Dies ermöglicht ein komfortables Einführen des Zugmittels, ohne es zusätzlich zwischen Klemmrinne und Schlitz seitlich abknicken zu müssen.

Um die Klemmwirkung zu erzielen, können in der Klemmrinne mehrere zahn-, rippen- oder noppenartige Vorsprünge vorhanden sein, die die Reibung des Zugmittels in der Klemmrinne erhöhen.

Es ist insbesondere denkbar, dass die Klemmrinne konisch zulaufend und/oder asymmetrisch ausgeführt ist.

In einer Ausgestaltung ist an die Klemmrinne ein Fortsatz angeformt, der sich über die Länge der Klemmrinne erstreckt und über die Klemmrinne gewölbt ist. Somit wird ein unbeabsichtigtes Lösen des Zugmittels aus der Klemmrinne verhindert.

Die Aufgabe der Erfindung wird außerdem durch ein Baukastensystem gelöst, das eine zuvor beschriebene, erfindungsgemäße Fixier- und Abspannvorrichtung aufweist und ein weiteres Adapterelement. Dabei ist an jedem Adapterelement einer der folgenden Aufsätze angeordnet: ein Haken, ein Saugnapf, ein Magnet, ein Karabiner, eine Augenplatte, eine Ringschraube, eine Klemme, ein Drehhaken, ein Klettband, ein Gewindeaufsatz oder eine Auswölbung mit einer Öffnung, durch die ein Hering oder ein Nagel durchführbar ist. Hinsichtlich der Vorteile und Merkmale wird auf die obigen Erläuterungen bezüglich der erfindungsgemäßen Fixier- und Abspannvorrichtung verwiesen, die gleichermaßen für das Baukastensystem gelten.

Beispielsweise sind die Aufsätze an dem jeweiligen Adapterelement austauschbar.

Um eine Kopplung auch zwischen den Adapterelementen zu ermöglichen, kann eines der Adapterelemente ein Außengewinde und das andere Adapterelement ein Innengewinde aufweisen. Damit ist das Adapterelement auf das andere Adapterelement aufschraubbar.

Weitere Merkmale und Vorteile der Erfindung ergeben sich aus der nachfolgenden Beschreibung sowie aus den beigefügten Zeichnungen, auf die im Folgenden Bezug genommen wird. In den Zeichnungen zeigen:
- Figur 1 eine schematische Seitenansicht zweier erfindungsgemäßer Baukastensysteme,
- Figuren 2a und 2b eine perspektivische Ansicht und eine Ansicht von unten einer erfindungsgemäßen Fixier- und Abspannvorrichtung der Figur 1 in einer ersten Ausführungsform,
- Figuren 3a bis 3g verschiedene Ausgestaltungen eines Adapterelements der Fixier- und Abspannvorrichtung gemäß der ersten Ausführungsform,
- Figur 4 eine perspektivische Ansicht eines am Grundkörper befestigten Zugmittels der Fixier- und Abspannvorrichtung gemäß der ersten Ausführungsform,
- Figuren 5a bis 5c den Grundkörper gemäß Figur 4 in einer Seitenansicht, einer Ansicht von unten und einer Draufsicht,
- Figuren 6a bis 6e verschiedene an dem Adapterelement gemäß der Figuren 3a und 3b befestigte Aufsätze,
- Figur 6f eine Kopplung von zwei Adapterelementen in einer perspektivischen Ansicht,
- Figuren 7 bis 10 verschiedene Ausgestaltungen einer am Grundkörper gemäß der Figuren 5a bis 5c befestigten Klemmeinheit.
- Figur 11 eine zweite Ausführungsform der erfindungsgemäßen Fixier- und Abspannvorrichtung in einer perspektivischen Ansicht,
- Figur 12 ein Detail eines Adapterelements der Fixier- und Abspannvorrichtung gemäß Figur 11,
- Figur 13 eine perspektivische Ansicht eines Grundkörpers der Fixier- und Abspannvorrichtung gemäß Figur 11,
- Figur 14a und 14b die Fixier- und Abspannvorrichtung in Kombination mit Adapterelementen gemäß der Figuren 3c bis 3g in einer Y-Konfiguration, und
- Figuren 15 und 16 weitere Ausgestaltungen des Grundkörpers der Fixier- und Abspannvorrichtung gemäß Figur 11.

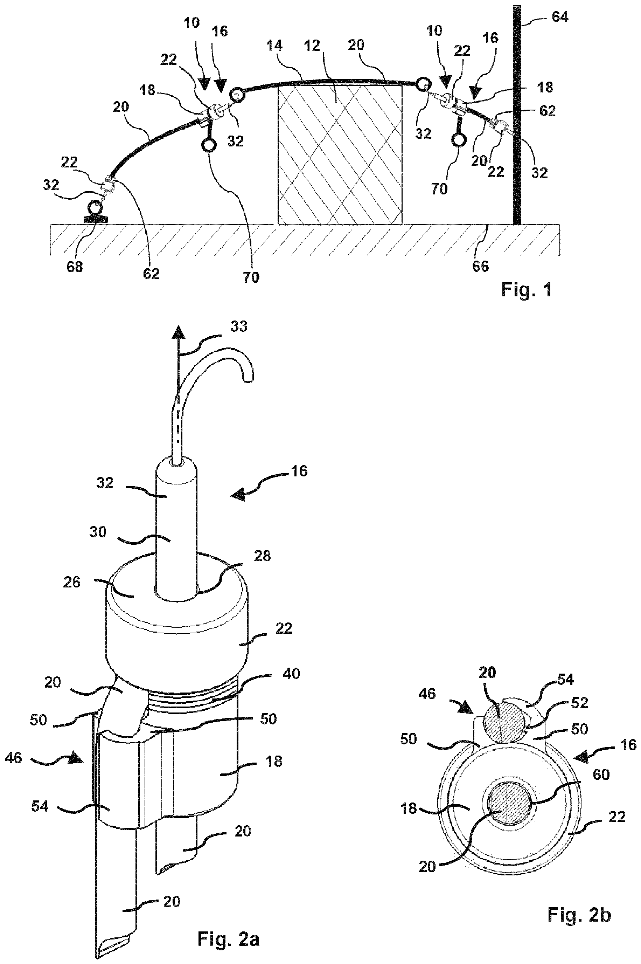

Figur 1 zeigt ein Abspannsystem mit zwei Baukastensystemen 10, die eine über einen Gegenstand 12 gelegte Plane 14 auf zwei entgegengesetzten Seiten der Plane 14 abspannen. Mit anderen Worten wird die Plane 14 über dem Gegenstand 12 durch die Baukastensysteme 10 fixiert.

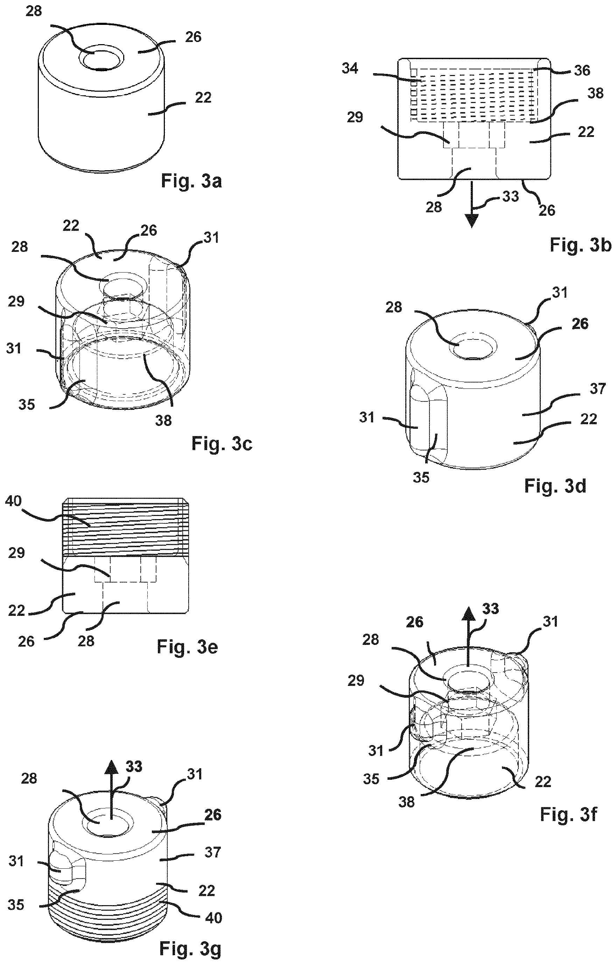

Jedes Baukastensystem 10 umfasst eine Fixier- und Abspannvorrichtung 16, die im Folgenden anhand der Figuren 2 bis 5 im Detail beschrieben werden. Dabei zeigen die Figuren 2a und 2b die gesamte Fixier- und Abspannvorrichtung 16 und die weiteren Figuren 3 bis 5 einzelne Komponenten hiervon.

Die Fixier- und Abspannvorrichtung 16 weist einen Grundkörper 18, ein längliches Zugmittel 20 und ein Adapterelement 22 auf. Dabei ist das längliche Zugmittel 20 elastisch und seitlich auslenkbar.

Beispielsweise besteht das Zugmittel 20 aus einem elastisch dehnbaren Kunststoff, z.B. einem Gummi.

Das Adapterelement 22 ist hohlzylindrisch ausgebildet und an einer Stirnseite des Adapterelements 22 ist ein Deckel 26 mit einer zentrisch angeordneten Durchgangsöffnung 28 einstückig angeformt.

Der Durchmesser der Durchgangsöffnung 28 entspricht im Wesentlichen der Dicke des Zugmittels 20, also dem Durchmesser des Zugmittels 20.

Damit ist das Adapterelement 22 einteilig und beispielsweise ein Spritzgussteil aus Kunststoff.

In einer Axialrichtung 33 angrenzend an die Durchgangsöffnung 28, weist das Adapterelement 22 eine Ausformung auf, in die eine Einlegemutter 29 eingesetzt ist.

Insbesondere ist die Einlegemutter 29 herausnehmbar, sodass diese gegebenenfalls in die Ausformung eingesetzt werden kann.

In der Ausgestaltung der Figur 2a bildet die Durchgangsöffnung 28 ein Befestigungsmittel für einen Aufsatz 30, beispielsweise für einen Haken 32 aus dem Baukastensystem. Der Aufsatz 30 wird also in die Durchgangsöffnung 28 eingesetzt.

Beispielsweise ist der Aufsatz 30 mittels eines Gewindes in die Einlegemutter 29 eingeschraubt und auf diese Weise in der Axialrichtung 33 fixiert, sodass eine Kraft in und entgegen der Axialrichtung 33 auf das Adapterelement 22 übertragen wird.

Somit bildet die Einlegemutter 29 einen Anschraubpunkt für den Haken 32.

Im Allgemeinen ist es auch denkbar, dass das Adapterelement 22 und der Aufsatz 30 einstückig ausgebildet sind.

Außerdem kann das Zugmittel 20 durch die Durchgangsöffnung 28 geführt sein und im Bereich der Ausformung am Adapterelement 22 fixiert sein. Somit kann entweder das Adapterelement 22 endseitig am Zugmittel 20 befestigt werden oder ein Aufsatz 30 in Verbindung mit der Einlegemutter 29 befestigt werden.

Wie in Figur 3b dargestellt ist, weist das Adapterelement 22 innenliegend ein Innengewinde 34 auf, das sich ausgehend vom Deckel 26 bis zu einer endseitigen Abstufung 36 erstreckt. Dabei ist das Adapterelement 22 in einem Übergangsbereich 38 zwischen Innengewinde 34 und Deckel 26 abgekantet.

Beispielsweise ist das Innengewinde 34 ein M24-Innengewinde.

Die Figuren 3c bis 3g zeigen weitere Ausgestaltungen des Adapterelements 22, die im Wesentlichen der Ausgestaltung der Figuren 3a und 3b entsprechen, sodass im Folgenden lediglich auf die Unterschiede eingegangen wird.

In der Ausgestaltung der Figur 3c weist das Adapterelement 22 außenseitig zwei Auswölbungen 31 auf, die am Adapterelement 22 diametral zueinander angeordnet sind und einen abgerundeten Übergang 35 in eine Mantelfläche 37 des Adapterelements 22 aufweisen.

Weiterhin hat das Adapterelement 22 in der Ausgestaltung der Figur 3e ein Außengewinde 40, das zusätzlich zum Innengewinde 34 ausgebildet ist.

Im Allgemeinen ist es natürlich denkbar, dass das Adapterelement 22 nur ein Außengewinde 40 und kein Innengewinde 34 aufweist.

Außerdem hat das Adapterelement 22 in der Ausgestaltung der Figuren 3f und 3g das Außengewinde 40 und die zwei Auswölbungen 31. Dabei erstrecken sich die Auswölbungen 31 über in etwa die Hälfte der Länge in Axialrichtung 33 des Adapterelements 22.

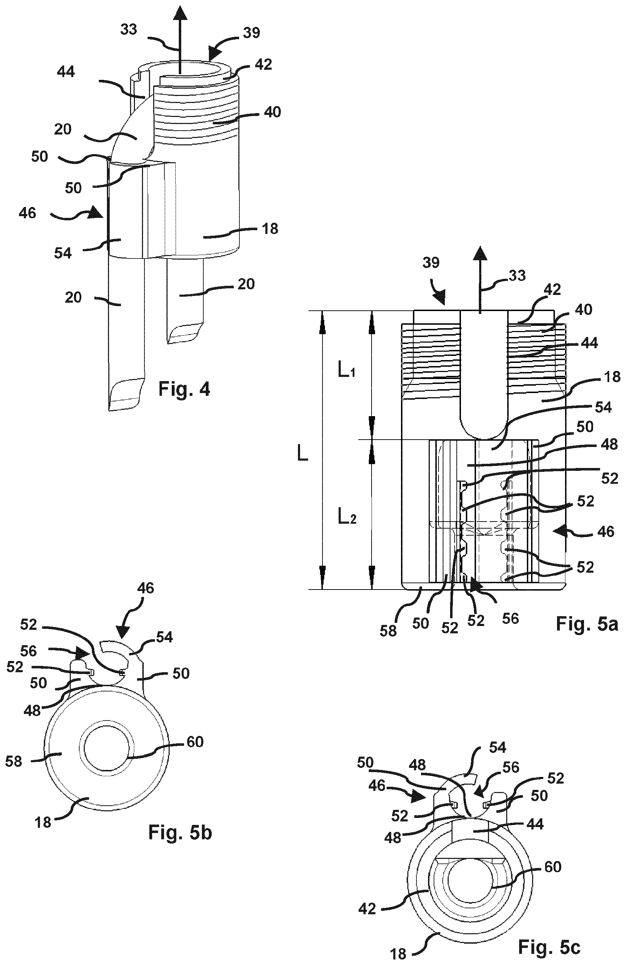

Figur 4 zeigt die Fixier- und Abspannvorrichtung 16 ohne das Adapterelement 22, also nur den Grundkörper 18 und das Zugmittel 20.

Der Grundkörper 18 ist wie das Adapterelement 22 hülsenförmig ausgeführt und weist an einer dem Adapterelement 22 zugeordneten Stirnseite 39 außenseitig ein Außengewinde 40 auf. Das Außengewinde 40 ist an das Innengewinde 34 des Adapterelements 22 angepasst, sodass das Adapterelement 22 mit dem Innengewinde 34 auf das Außengewinde 40 des Grundkörpers aufschraubbar ist.

Das Außengewinde 40 kann also ein M24-Außengewinde sein.

Im Allgemeinen kann natürlich auch der Grundkörper 18 das Innengewinde 34 aufweisen und das Adapterelement 22 das Außengewinde 40 (siehe Figur 3e).

Somit ist das Adapterelement 22 am Grundkörper 18 werkzeugfrei befestigbar und auch wieder vollständig von diesem zerstörungsfrei lösbar.

Der Grundkörper 18 hat ferner einen Steg 42, der endseitig an der Stirnseite 39 des Grundkörpers 18 angeordnet ist und sich von dieser Stirnseite 39 in der Axialrichtung 33 erstreckt.

Dabei weist der Grundkörper 18 im Bereich des Stegs 42 einen geringeren Außendurchmesser auf als im Bereich des Außengewindes 40.

Auf diese Weise wird ein Aufschrauben des Adapterelements 22 auf den Grundkörper 18 vereinfacht, da der Grundkörper 18, genauer gesagt der Steg 42 zunächst etwas in den Grundkörper 18 eingeführt wird bevor das Außengewinde 40 und das Innengewinde 34 ineinandergreifen.

Somit werden das Adapterelement 22 und der der Grundkörper 18 vor dem Aufeinanderschrauben relativ zueinander zentriert.

Der Steg 42 ist C-förmig ausgebildet und im ausgesparten Bereich des Stegs 42 hat der Grundkörper 18 einen Schlitz 44, der in der Seitenansicht (Figur 5a) des Grundkörpers 18 durch eine U-förmige Wandung begrenzt ist.

Der Schlitz 44 ist somit radial durchgehend. Insbesondere ist der Schlitz 44 von seiner Schlitzbreite an das Zugmittel 20 angepasst, d.h. schmäler als die Dicke des Zugmittels 20.

Der Schlitz 44 erstreckt sich ausgehend von der Stirnseite 39 des Grundkörpers 18, die dem Adapterelement 22 zugeordnet ist, entgegen der Axialrichtung 33 axial über eine erste Teillänge L₁ einer Gesamtlänge L des Grundkörpers 18 (siehe Figur 5a).

In der ersten Ausführungsform ist die Teillänge L₁ in etwa 45% der Gesamtlänge L.

Zusätzlich ist der Schlitz 44 konisch ausgebildet. Das heißt, dass der Schlitz 44 im Bereich des Steges 42 eine größere Breite aufweist als im abgerundeten Bereich des Schlitzes 44.

Axial angrenzend an den Schlitz 44 ist an der Außenseite des Grundkörpers 18 eine Klemmeinheit 46 ausgebildet, insbesondere einstückig angeformt, die sich über eine zweite Teillänge L₂ des Grundkörpers 18 erstreckt.

Dabei entspricht die Summe der ersten Teillänge L₁ und der zweiten Teillänge L₂ der Gesamtlänge L. Dementsprechend erstreckt sich die Klemmeinheit 46 der ersten Ausführungsform über in etwa 55 % der Gesamtlänge L des Grundkörpers 18.

Die Klemmeinheit 46 hat eine Klemmrinne 48 (siehe insbesondere Figuren 5a bis 5c), die sich parallel zur Axialrichtung 33 erstreckt und seitliche, hier längliche Schenkel 50 aufweist.

An den sich gegenüberliegenden Seiten der Schenkel 50 sind noppenartige, zahnartige oder rippenartige Vorsprünge 52 angeformt, die von den entsprechenden Schenkeln 50 vorstehen.

Dabei sind an jedem Schenkel 50 die entsprechenden Vorsprünge 52 in der Erstreckungsrichtung der Klemmrinne 48 voneinander beabstandet.

Zusätzlich sind die Vorsprünge 52 der Schenkel 50 in der Erstreckungsrichtung der Klemmrinne 48 auf gleicher Höhe angeordnet.

Es gibt also Paare an Vorsprüngen 52, die sich gegenüberliegen.

Im Allgemeinen ist es auch denkbar, dass die Paare an Vorsprüngen 52 versetzt zueinander angeordnet sind.

Einer der Schenkel 50 weist einen Fortsatz 54 auf, der sich in Richtung zum anderen Schenkel 50 erstreckt und dabei die Klemmrinne 48 radial nach außen teilweise abschließt, so dass die Klemmrinne nicht radial nach außen offen ist, sondern schräg nach außen.

Mit anderen Worten wird zwischen dem anderen Schenkel 50 und dem Fortsatz 54 eine längliche Öffnung 56 gebildet (siehe insbesondere Figuren 5b und 5c), die derart ausgebildet, dass der Abstand des Fortsatzes 54 zu dem anderen Schenkel 50 kleiner ist als die Dicke des Zugmittels 20.

Die Klemmeinheit 46 erstreckt sich bis zu einem axialen Ende des Grundkörpers 18 und an diesem Ende weist der Grundkörper 18 einen einstückig angeformten Boden 58 auf, in dem eine zentrisch angeordnete Durchgangsöffnung 60 ausgebildet ist.

Dabei ist der Grundkörper 18 derart ausgebildet, dass das Zugmittel 20 durch den Grundkörper 18 durchführbar ist.

Genauer gesagt wird das Zugmittel 20 durch die Durchgangsöffnung 60 in den Grundkörper 18 hineingeführt (Figur 2b) und seitlich aus dem Schlitz 44 aus dem Grundkörper 18 heraus. Dabei entspricht der Durchmesser der Durchgangsöffnung 60 im Wesentlichen der Dicke des Zugmittels 20.

Somit umschließt die Durchgangsöffnung 60 das Zugmittel 20 vollumfänglich.

Grundsätzlich ist der Grundkörper 18 entlang des Zugmittels 20 beliebig verschiebbar. Um die Position des Grundkörpers 18 entlang des Zugmittels 20 zu fixieren, wird das Zugmittel 20 durch die längliche Öffnung 56 in die Klemmeinheit 46 eingeführt.

Genauer gesagt wird das Zugmittel 20 in die Klemmrinne 48 eingelegt und die Vorsprünge 52 greifen außenseitig am Zugmittel 20 an, sodass der Grundkörper 18 an der Position in der Längsrichtung des Zugmittels 20 fixiert wird.

Dabei verhindert der Fortsatz 54, dass sich das Zugmittel 20 ungewollt radial nach außen bewegt, sich also aus der Klemmrinne 48 löst.

Auf die Stirnseite 39 des Grundkörpers 18, die das Außengewinde 40 aufweist, wird zusätzlich das Adapterelement 22 aufgeschraubt.

Im montierten Zustand des Adapterelements 22 am Grundkörper 18 sind die Durchgangsöffnungen 28, 60 konzentrisch zueinander angeordnet.

Dabei verschließt das Adapterelement 22 im montierten Zustand am Grundkörper 18 zumindest teilweise den Schlitz 44 seitlich nach außen (Figur 2a) und drückt das Zugmittel 20 axial gegen den Boden des Schlitzes 44, so dass damit eine zusätzliche Halterung des Zugmittels 20 erfolgt.

In Figur 1 ist die Fixier- und Abspannvorrichtung 16 im zusammengesetzten Zustand dargestellt. Dabei greift der an dem Adapterelement 22 angeordnete Haken 32 jeder Fixier- und Abspannvorrichtung 16 in eine entsprechende Öse der Plane 14.

An dem Ende des Zugmittels 20, das aus der Durchgangsöffnung 60 des Grundkörpers 18 herausgeführt ist, ist zudem ein weiteres Adapterelement 62 angeordnet, das entsprechend dem Adapterelement 22 der Figur 3g ausgebildet ist, also ein Außengewinde 40 aufweist.

Beispielsweise weist dieses Ende des Zugmittels 20 ein entsprechendes Befestigungsmittel auf, das fest mit dem Zugmittel 20 verbunden ist und an dem das weitere Adapterelement 62 lösbar befestigt ist.

Im Allgemeinen kann das weitere Adapterelement 62 auch nicht lösbar an einem Ende des Zugmittels 20 befestigt sein.

Das Adapterelement 22 ist also dasjenige, das auf den Grundkörper 18 aufschraubbar ist und das weitere Adapterelement 62 dasjenige, das an dem Ende des Zugmittels 20 befestigt ist, das aus der Durchgangsöffnung 60 des Grundkörpers 18 herausgeführt ist.

Auf die weiteren Adapterelemente 62 sind in der Ausführungsform der Figur 1 entsprechende Adapterelement 22 mit einem Haken 32 als Aufsatz 30 aufgeschraubt. Dabei ist der in der Figur 1 auf der rechten Seite dargestellte Haken 32 des Adapterelements 22 an einer Stange 64 eingehängt und der Haken 32 des auf der linken Seite der Figur 1 dargestellten Adapterelements 22 in einem an einem Boden 66 befestigten Halbring 68.

Natürlich kann das weitere Adapterelement 62 auch identisch zum Adapterelement 22 ausgeführt sein.

Das Zugmittel 20 ist jeweils zwischen dem weiteren Adapterelement 62 und dem Grundkörper 18 gespannt, sodass die Plane 14 abgespannt ist und den Gegenstand 12 vor Sonneneinstrahlung und Regen schützt.

Dabei wird die Länge des Abschnitts des Zugmittels 20 zwischen dem weiteren Adapterelement 62 und dem Grundkörper 18 über die Positionierung des Grundkörpers 18 entlang des Zugmittels 20 mittels der Klemmeinheit 46 eingestellt und evtl. im Schlitz 44 mittels des Adapterelements 22 verklemmt.

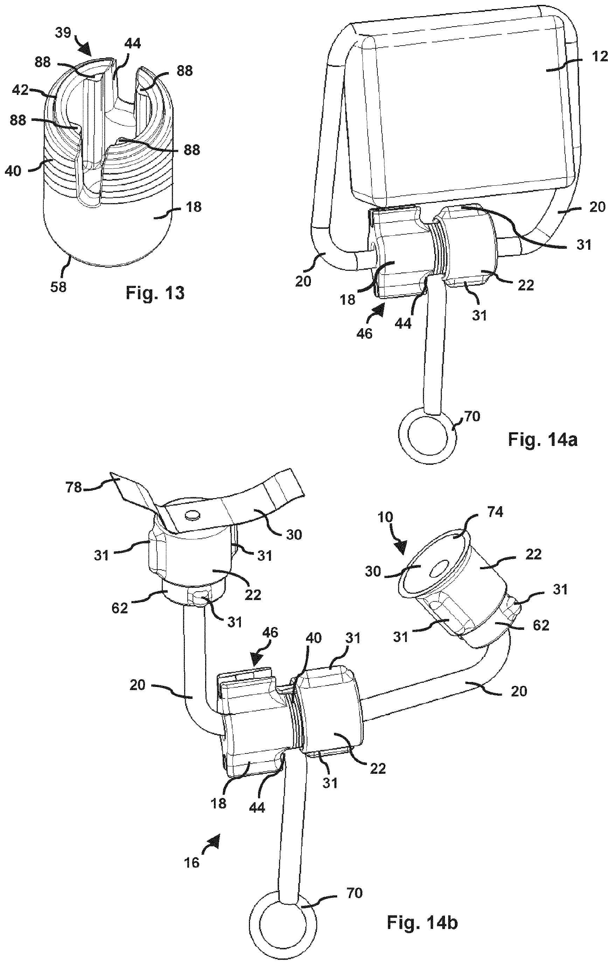

An dem Ende des Zugmittels 20, das aus dem Schlitz 44 herausgeführt wird, ist z.B. ein Befestigungsmittel 70, hier ein Befestigungsring am Zugmittel 20 befestigt (siehe Figur 14a). Dabei ist das Befestigungsmittel 70 derart gestaltet, dass das Befestigungsmittel 70 im Inneren des Grundkörpers 18 aufgenommen werden kann und dass das Befestigungsmittel 70 nicht aus der Durchgangsöffnung 60 herausgezogen werden kann.

Die Figur 1 zeigt eine beispielhafte Verwendung der Fixier- und Abspannvorrichtung 16. Die Adapterelemente 22, 62 wurden in dieser Verwendung speziell ausgesucht. Dabei ist es der große Vorteil der Fixier- und Abspannvorrichtung 16 und auch des Baukastensystems 10, dass die Adapterelemente 22, 62 individuell an die Verwendungssituation anpassbar sind. Außerdem kann an der Fixier- und Abspannvorrichtung 16 die wirksame Länge des Zugmittels 20 eingestellt und gleichzeitig verschiedene Adapterelemente 22 verwendet werden.

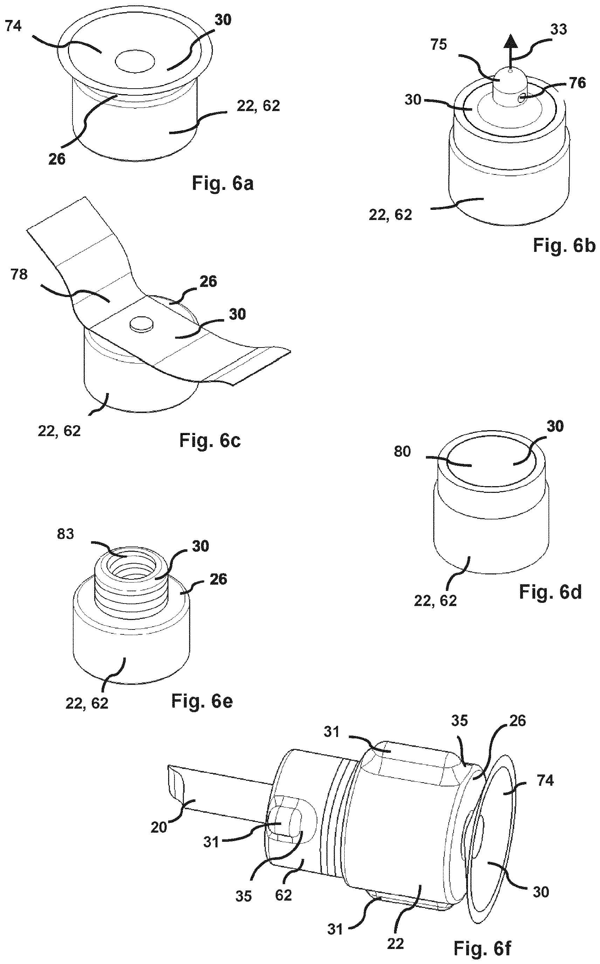

In den Figuren 6a bis 6e sind weitere, mögliche Aufsätze 30 für die Adapterelement 22, 62 gezeigt.

Beispielsweise zeigt die Figur 6a ein Adapterelement 22, 62 mit einem Saugnapf 74 als Aufsatz 30. Dieses Adapterelement 22, 62 wird zum Beispiel für glatte Oberflächen verwendet.

An dem Adapterelement 22, 62 der Figur 6b ist in Axialrichtung 33 eine Auswölbung 75 ausgebildet, die eine quer zur Axialrichtung 33 verlaufende Öffnung 76 aufweist.

Durch die Öffnung 76 kann beispielsweise ein stiftartiges Befestigungselement, z.B. ein Nagel oder ein Hering, geführt werden.

In dem Verwendungsfall der Figur 1 könnte beispielsweise das weitere Adapterelement 62 des in der Figur 1 auf der linken Seite dargestellten Baukastensystems 10 durch das Adapterelement 22, 62 der Figur 6b ausgewechselt werden und dieses weitere Adapterelement 62 dann mittel eines Herings im Boden 66 befestigt werden.

Ferner zeigt die Figur 6c ein Adapterelement 22, 62 mit einem Klettband 78 als Aufsatz 30. Beispielsweise könnte dieses Adapterelement 22, 62 an dem in Figur 1 auf der rechten Seite dargestellten Baukastensystem 10 verwendet werden, um das weitere Adapterelement 62 an der Stange 64 zu befestigten.

Des Weiteren sind noch ein Magnet 80 (Figur 6d) oder ein Gewindeaufsatz 83 mit einem Außengewinde und/oder Innengewinde (Figur 6e) denkbar. Die Vielzahl an Möglichkeiten an Adapterelementen 22, 62 zeigt also, dass es eine Vielzahl an Einsatzmöglichkeiten für das Baukastensystem 10 gibt.

Außerdem zeigt die Figur 6f, dass das weitere Adapterelement 62 und das Adapterelement 22 auch koppelbar ausgebildet sein können, genauer gesagt aufeinander aufschraubbar.

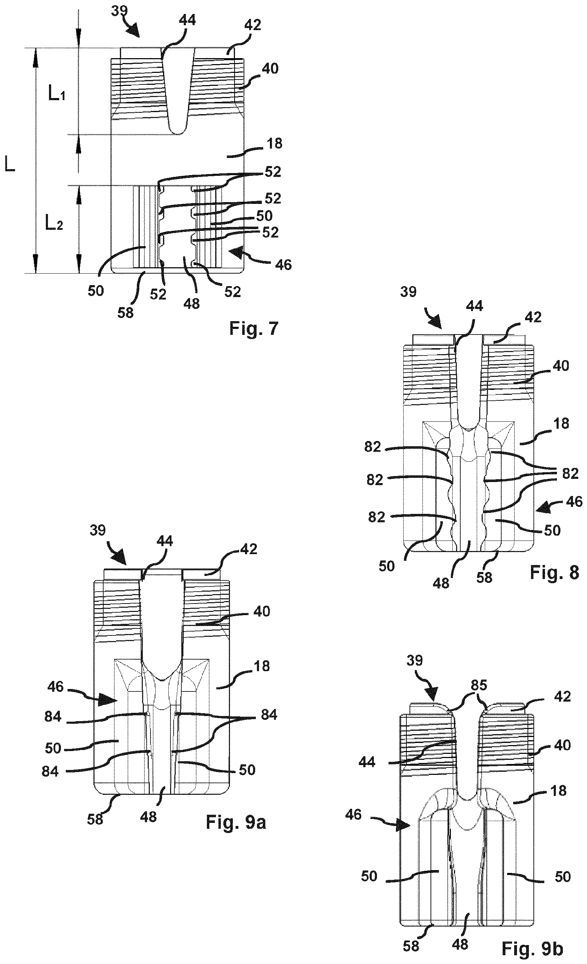

Anhand der Figuren 7 bis 10 werden im Folgenden verschiedene Ausgestaltungen der Klemmeinheit 46 am Grundkörper 18 beschrieben, die im Wesentlichen der Klemmeinheit 46 der Figuren 4 bis 5c entsprechen. Im Folgenden wird daher lediglich auf die Unterschiede eingegangen.

Im Unterschied zur Ausgestaltung der Figur 5a weist die Klemmeinheit 46 der Figur 7 keinen Fortsatz 54 auf. Dementsprechend kann das Zugmittel 20 vom Schlitz 44 aus unmittelbar nach unten direkt in die Klemmrinne 48 eingesetzt werden. Diese Ausgestaltung ermöglicht eine schnelle Längenverstellung des Zugmittels 20 am Grundkörper 18.

Zusätzlich ist die erste Teillänge L₁ in etwa 40% der Gesamtlänge L und gleich lang wie zweite Teillänge L₂ der Klemmeinheit 46.

Außerdem ergibt die Summe der ersten Teillänge L₁ und der zweiten Teillänge L₂ in der Ausgestaltung der Figur 7 nicht die Gesamtlänge L des Grundkörpers 18.

In der Figur 8 weisen die sich gegenüberliegenden Seiten der Schenkel 50 keine Vorsprünge 52 auf, sondern die Seiten sind geschwungen ausgebildet.

Die Schenkel 50 haben also Höcker 82, und das Zugmittel 20 wird zwischen gegenüberliegenden Höckern 82 der Schenkel 50 eingeklemmt.

Anstelle von Höckern 82 weist die Klemmeinheit 46 in der Ausgestaltung der Figur 9a an den sich gegenüberliegenden Seiten der Schenkel 50 Abstufungen 84 auf.

Zusätzlich ist die Klemmrinne 48 in der Ausgestaltung der Figur 9a konisch zulaufend ausgebildet.

Figur 9b zeigt eine Ausgestaltung der Klemmeinheit 46 mit einem im Bereich der Klemmrinne 48 konvexen, zum Boden 58 hin verjüngenden Verlauf der Schenkel 50.

Dabei sind die Schenkel 50 symmetrisch zueinander ausgebildet.

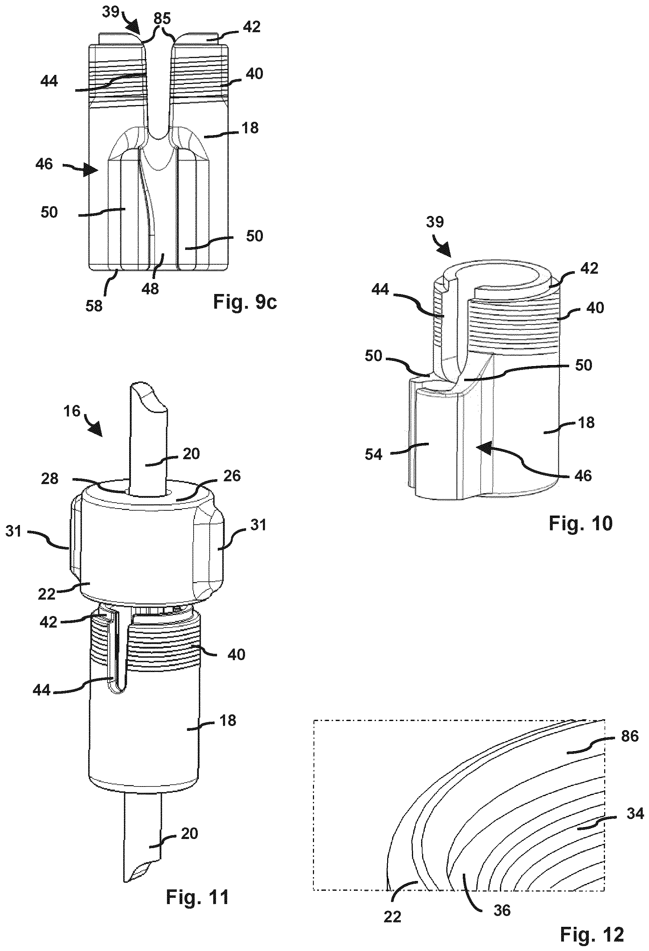

Im Gegensatz dazu sind die Schenkel 50 in der Ausgestaltung der Figur 9c asymmetrisch zueinander ausgebildet. Einer der Schenkel 50 weist einen geraden Verlauf und der andere einen konvexen Verlauf auf.

Zusätzlich weisen die Ausgestaltungen der Figuren 9b und 9c im oberen Bereich des Schlitzes 44, also im Bereich des Steges 42, eine Abrundung 85 auf, um das Zugmittel 20 vor Schäden während des Einführens in den Schlitz 44 zu schützen.

Im Unterschied zur Ausgestaltung der Figur 9a weist die Klemmeinheit 46 des Grundkörpers 18 in der Figur 10 zusätzlich den Fortsatz 54 auf, der sich von einem Schenkel 50 in Richtung zum anderen erstreckt.

Die in den Figuren 7 bis 10 beschriebenen Ausgestaltungen der Klemmeinheiten 46 können dabei beliebig am Grundkörper 18 der Fixier- und Abspannvorrichtung 16 ausgebildet sein.

Die Figuren 11 bis 14 zeigen eine zweite Ausführungsform der Fixier- und Abspannvorrichtung 16, die im Wesentlichen der Fixier- und Abspannvorrichtung 16 gemäß der ersten Ausführungsform entspricht. Im Folgenden wird daher lediglich auf die Unterschiede eingegangen.

Im Unterschied zur ersten Ausführungsform ist das Zugmittel 20 in der Fixier- und Abspannvorrichtung 16 der Figur 11 durch die Durchgangsöffnung 28 des Deckels 26 des Adapterelements 22 geführt und das Zugmittel 20 weist an dem in das Adapterelement 22 geführten Ende das Befestigungsmittel 70 auf.

Dementsprechend ist das Adapterelement 22 entlang des Zugmittels 20 verschiebbar. Allerdings kann das Zugmittel 20 nicht aus dem Adapterelement 22 herausgezogen werden kann.

Des Weiteren ist am Grundkörper 18 keine Klemmeinheit 46 angeformt.

Der Grundkörper 18 weist zwei Schlitze 44 auf, die am Grundkörper 18 diametral zueinander angeordnet sind.

In der Ausführungsform der Figur 11 können somit beide Enden des Zugmittels 20 jeweils durch einen der Schlitze 44 geführt werden und die Position des Adapterelements 22 und des Grundkörpers 18 entlang des Zugmittels 20 wird über das Adapterelement 22 fixiert. Das Zugmittel 20 bildet somit, durch den Gewindeeingriff des Adapterelements 22 mit dem Grundkörper 18, einen geschlossenen Ring oder mit anderen Worten eine geschlossene Schlaufe.

In einem montierten und vollständig am Grundkörper 18 aufgeschraubten Zustand verschließt das Adapterelement 22 beide Schlitze 44 zumindest teilweise und klemmt das Zugmittel 20 im entsprechenden Schlitz 44 axial ein.

Hierfür ist das Adapterelement 22 in einem Bereich 86, mit dem Zugmittel 20 im Schlitz 44 eingeklemmt wird, abgerundet, sodass keine scharfen Kanten auf das Zugmittel 20 einwirken.

In dem Bereich 86 weist das Adapterelement 22 also eine Fase auf.

Somit können mit der Fixier- und Abspannvorrichtung 16 auch beide Enden des Zugmittels 20 eingeklemmt und damit die Länge des Zugmittels 20 zwischen Durchgangsöffnung 60 des Grundkörpers 18 und der Durchgangsöffnung 28 des Adapterelements 22 eingestellt werden.

Im Inneren des Grundkörpers 18 (Figur 13) sind angrenzend an beide Seiten der Schlitze 44 Verdickungen 88 angeformt, die sich über die gesamte Länge der Schlitze 44 und weiter bis zum Boden 58 des Grundkörpers 18 erstrecken. Dabei verstärken die Verdickungen 88 den Grundkörper 18 im Bereich der Schlitze 44.

Figur 14a zeigt eine beispielhafte Verwendung der zweiten Ausführungsform in einer Y-Konfiguration. Das schlaufenförmig verlaufende Zugmittel 20 umschließt den Gegenstand 12 und ein Ende des Zugmittels 20 ist aus einem der Schlitze 44 herausgeführt. Dementsprechend ist das Befestigungsmittel 70 außerhalb des Grundkörpers 18 angeordnet und es kann beispielsweise aus dem Baukastensystem 10 der Figur 1 einen entsprechender Haken 32 in das Befestigungsmittel 70 eingehängt werden. Somit können auch mehrere Fixier- und Abspannvorrichtungen 16 und/oder Baukastensysteme 10 kombiniert werden.

Figur 14b zeigt beispielhaft ein Baukastensystem 10, bei dem eine Fixier- und Abspannvorrichtung 16 mit einem weiteren Zugmittel 20 kombiniert ist, wobei diese Kombination auch in einer Y-Konfiguration ausgebildet ist. Dabei wird an jedem Ende eine Befestigungsmöglichkeit bereitgestellt, nämlich durch das Befestigungsmittel 70, das Adapterelement 22 mit dem Klettband 78 und durch das Adapterelement 22 mit dem Saugnapf 74.

Die Ausgestaltung der Figur 14b weist insgesamt fünf Adapterelemente 22, 62 einen Grundkörper 18 sowie einem an einem Ende des Zugmittels 20 befestigten Befestigungsmittel 70 auf.

Das durch den Grundkörper 18 geführte Zugmittel 20 wird durch das auf den Grundkörper 18 aufgeschraubte Adapterelement 22 (an dem das weitere Zugmittel 20 befestigt ist) axial in Position gehalten.

Natürlich können auch sämtliche Aufsätze 30 aus dem Baukastensystem 10 alternativ an die Adapterelemente 62 angebunden werden.

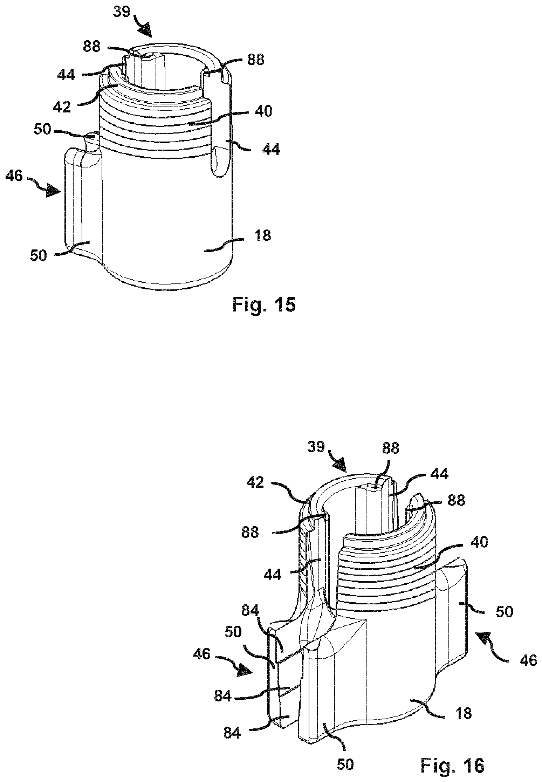

Die Figuren 15 und 16 zeigen weitere Ausgestaltungen des Grundkörpers 18 der zweiten Ausführungsform.

In der Ausgestaltung der Figur 15 ist einem der Schlitze 44 eine Klemmeinheit 46 zugeordnet, der andere Schlitz 44 weist wiederum keine Klemmeinheit 46 auf. Dabei kann eine beliebige Klemmeinheit 46 der Figuren 4 und 7 bis 10 am Grundkörper ausgebildet sein.

In der Ausgestaltung der Figur 16 ist dann jedem Schlitz 44 eine entsprechende Klemmeinheit 46 zugeordnet und die Klemmeinheiten 46 sind gleich ausgeführt.

Im Allgemeinen ist es natürlich auch denkbar, dass verschiedene Ausgestaltungen der Klemmeinheiten 46 an den entsprechenden Schlitzen 44 ausgebildet sind.

## Patentansprüche

1. Fixier- und Abspannvorrichtung zum Fixieren eines Gegenstandes, mit einem Grundkörper (18), einem Adapterelement (22) und einem seitlich auslenkbaren, länglichen Zugmittel (20), das durch eine axiale Durchgangsöffnung (60) in dem Grundkörper (18) durchführbar ist,
wobei der Grundkörper (18) das Zugmittel (20) am Umfang vollständig umschließt und entlang des Zugmittels (20) verschiebbar ist,
der Grundkörper (18) und das Adapterelement (22) werkzeugfrei voneinander komplett zerstörungsfrei lösbar und durch axiales Aufeinanderschieben miteinander koppelbar sind, und
der Grundkörper (18) einen seitlichen, von außen radial zur Durchgangsöffnung (60) durchgehenden Schlitz (44) aufweist, durch den das Zugmittel (20) durchführbar ist, wobei das Adapterelement (22) in einem montierten Zustand am Grundkörper (18) den Schlitz (44) zumindest teilweise verschließt, wobei
der Grundkörper (18) und/oder das Adapterelement (22) hülsenförmig ist, und dass das Adapterelement (22) in einem montierten Zustand am Grundkörper (18) befestigt ist und das Zugmittel (20) im Schlitz (44) klemmt, **dadurch gekennzeichnet, dass** das Adapterelement (22) eine Durchgangsöffnung (28) aufweist, die ein Befestigungsmittel für einen Aufsatz (30) bildet.

2. Fixier- und Abspannvorrichtung nach Anspruch 1, **dadurch gekennzeichnet, dass** sich der Schlitz (44) von einer Stirnseite (39) des Grundkörpers (18) aus axial über eine Teillänge (L₁) des Grundkörpers (18) erstreckt, insbesondere wobei der Schlitz (44) ausgehend von der Stirnseite (39) des Grundkörpers (18) konisch zulaufend ist.

3. Fixier- und Abspannvorrichtung nach Anspruch 1 oder 2, **dadurch gekennzeichnet, dass** der Grundkörper (18) einen zweiten Schlitz (44) aufweist, der dem ersten Schlitz (44) vorzugsweise diametral gegenüberliegt, und dass das Adapterelement (22) in einem am Grundkörper (18) montierten Zustand beide Schlitze am Grundkörper (18) zumindest teilweise verschließt.

4. Fixier- und Abspannvorrichtung nach einem der vorhergehenden Ansprüche, **dadurch gekennzeichnet, dass** der Grundkörper (18) ein Außengewinde (40) aufweist und das Adapterelement (22) ein Innengewinde (34), wobei das Adapterelement (22) mittels des Innengewindes (34) auf das Außengewinde (40) des Grundkörpers (18) aufschraubbar ist.

5. Fixier- und Abspannvorrichtung nach einem der vorhergehenden Ansprüche, **dadurch gekennzeichnet, dass** das Zugmittel (20) axial durch das Adapterelement (22) hindurchläuft.

6. Fixier- und Abspannvorrichtung nach einem der vorhergehenden Ansprüche, **dadurch gekennzeichnet, dass** der Grundkörper (18) oder das Adapterelement (22) an einer Stirnseite einen axial vorstehenden Steg (42) aufweist.

7. Fixier- und Abspannvorrichtung nach einem der vorhergehenden Ansprüche, **dadurch gekennzeichnet, dass** die Durchgangsöffnung (60) zentrisch angeordnet ist.

8. Fixier- und Abspannvorrichtung nach einem der vorhergehenden Ansprüche, **dadurch gekennzeichnet, dass** der Grundkörper (18) innenseitig im Bereich des Schlitzes (44) eine Verdickung (88) aufweist, die sich über die gesamte Länge des Schlitzes (44) erstreckt.

9. Fixier- und Abspannvorrichtung nach einem der vorhergehenden Ansprüche, **dadurch gekennzeichnet, dass** das Adapterelement (22) im montierten Zustand das Zugmittel (20) im Schlitz (44) klemmt, insbesondere seitlich der Außenseite des Grundkörpers (18) über den Grundkörper (18) hinweg verläuft und einen Abschnitt des Schlitzes (44) verdeckt.

10. Fixier- und Abspannvorrichtung nach einem der vorhergehenden Ansprüche, **dadurch gekennzeichnet, dass** das Zugmittel (20) endseitig ein Befestigungsmittel (70) aufweist, das nicht lösbar am Zugmittel (20) befestigt ist.

11. Fixier- und Abspannvorrichtung nach einem der vorhergehenden Ansprüche, **dadurch gekennzeichnet, dass** am Grundkörper (18) außenseitig eine Klemmeinheit (46) angeordnet, insbesondere einstückig angeformt ist, die dazu ausgebildet ist, eine Bewegung des Zugmittels (20) in Längsrichtung zu unterbinden.

12. Fixier- und Abspannvorrichtung nach Anspruch 11, dass die Klemmeinheit (46) eine Klemmrinne (48) aufweist, in welche das Zugmittel (20) wahlweise einführbar ist, um darin geklemmt zu werden, insbesondere wobei die Klemmrinne (48) in Seitenansicht gesehen an den Schlitz (44) angrenzt und zu ihm ausgerichtet ist.

13. Baukastensystem mit einer Fixier- und Abspannvorrichtung (16) nach einem der vorhergehenden Ansprüche und einem weiteren Adapterelement (62),
wobei an jedem Adapterelement (22, 62) einer der folgenden Aufsätze (30) angeordnet ist: ein Haken (32), ein Saugnapf (74), ein Magnet (80), ein Karabiner, eine Augenplatte, eine Ringschraube, eine Klemme, ein Drehhaken, ein Klettband (78), ein Gewindeaufsatz (83) oder eine Auswölbung (75) mit einer seitlichen Öffnung (76), durch die ein stiftartiges Befestigungselement durchführbar ist.

14. Baukastensystem nach Anspruch 13, **dadurch gekennzeichnet, dass** eines der Adapterelemente (22, 62) ein Außengewinde (40) aufweist und das andere Adapterelement (62, 22) ein Innengewinde (34), wobei das Adapterelement (22, 62) auf das andere Adapterelement (62, 22) aufschraubbar ist.

## Claims

1. A fixing and tensioning device for fixing an object in place, comprising
a base body (18), an adapter element (22) and a laterally deflectable, elongated tension means (20) which is adapted to be passed through an axial passage opening (60) in the base body (18),
wherein the base body (18) fully encloses the tension means (20) at the circumference and is displaceable along the tension means (20),
the base body (18) and the adapter element (22) being completely non-destructively releasable from each other without a tool and being adapted to be coupled to each other by being axially slid onto each other, and
the base body (18) has a lateral slot (44) which extends radially from the outside to the passage opening (60) and through which the tension means (20) can be passed, the adapter element (22) at least partially closing the slot (44) in a mounted state on the base body (18), the base body (18) and/or the adapter element (22) being sleeve-shaped, and the adapter element (22) being fastened to the base body (18) in a mounted state and clamping the tension means (20) within the slot (44), **characterized in that** the adapter element (22) has a passage opening (28) which constitutes a fastening means for an attachment (30).

2. The fixing and tensioning device according to claim 1, **characterized in that** the slot (44) extends axially from a face side (39) of the base body (18) over a partial length (L₁) of the base body (18), in particular wherein the slot (44) is conically tapered starting from the face side (39) of the base body (18).

3. The fixing and tensioning device according to claim 1 or 2, **characterized in that** the base body (18) has a second slot (44) which is preferably diametrically opposite the first slot (44), and **in that** the adapter element (22) at least partially closes both slots on the base body (18) in a state in which it is mounted to the base body (18).

4. The fixing and tensioning device according to any of the preceding claims, **characterized in that** the base body (18) includes an external thread (40) and the adapter element (22) includes an internal thread (34), the adapter element (22) being adapted to be screwed onto the external thread (40) of the base body (18) by means of the internal thread (34).

5. The fixing and tensioning device according to any of the preceding claims, **characterized in that** the tension means (20) passes axially through the adapter element (22).

6. The fixing and tensioning device according to any of the preceding claims, **characterized in that** the base body (18) or the adapter element (22) includes an axially protruding ridge (42) on a face side.

7. The fixing and tensioning device according to any of the preceding claims, **characterized in that** the passage opening (60) is arranged centrally.

8. The fixing and tensioning device according to any of the preceding claims, **characterized in that** the base body (18) has a thickened portion (88) on the inside in the area of the slot (44), which extends over the entire length of the slot (44).

9. The fixing and tensioning device according to any of the preceding claims, **characterized in that** in the mounted state, the adapter element (22) clamps the tension means (20) inside the slot (44), in particular extends over the base body (18) laterally of the outer surface of the base body (18) and covers a portion of the slot (44).

10. The fixing and tensioning device according to any of the preceding claims, **characterized in that** on the end side the tension means (20) includes a fastening means (70) which is non-releasably fastened to the tension means (20).

11. The fixing and tensioning device according to any of the preceding claims, **characterized in that** on the outside of the base body (18) a clamping unit (46) is arranged, in particular integrally molded therewith, which is designed to prevent a movement of the tension means (20) in the longitudinal direction.

12. The fixing and tensioning device according to claim 11, wherein the clamping unit (46) includes a clamping groove (48) into which the tension means (20) is selectively insertable to be clamped therein, in particular wherein the clamping groove (48), as seen in a side view, is adjacent to and oriented towards the slot (44).

13. A modular system comprising a fixing and tensioning device (16) according to any of the preceding claims and a further adapter element (62),
wherein each adapter element (22, 62) has one of the following attachments (30) arranged thereon: a hook (32), a suction cup (74), a magnet (80), a carabiner, an eye plate, an eye bolt, a clamp, a swivel hook, a hook and loop strap (78), a threaded attachment (83), or a protrusion (75) having a lateral opening (76) through which a pin-like fastening element can be passed.

14. The modular system according to claim 13, **characterized in that** one of the adapter elements (22, 62) includes an external thread (40) and the other adapter element (62, 22) includes an internal thread (34), wherein the adapter element (22, 62) is adapted to be screwed onto the other adapter element (62, 22).

## Revendications

1. Dispositif de fixation et de tension pour la fixation d'un objet, comprenant un corps de base (18), un élément adaptateur (22) et un moyen de tension (20) allongé qui est apte à être défléchi latéralement et qui peut être guidé à travers une ouverture de passage (60) axiale dans le corps de base (18),
le corps de base (18) renfermant entièrement le moyen de tension (20) sur la périphérie et étant apte à être déplacé le long du moyen de tension (20),
le corps de base (18) et l'élément adaptateur (22) étant aptes à être détachés l'un de l'autre de manière entièrement non destructive et sans outil et étant aptes à être couplés l'un à l'autre par glissement axial l'un sur l'autre, et
le corps de base (18) présentant une fente (44) latérale radialement traversante de l'extérieur vers l'ouverture de passage (60), à travers laquelle le moyen de tension (20) peut être guidé, l'élément adaptateur (22) fermant au moins partiellement la fente (44) dans un état monté sur le corps de base (18),
le corps de base (18) et/ou l'élément adaptateur (22) présentant une forme de douille, et l'élément adaptateur (22) étant fixé au corps de base (18) dans un état monté et serrant le moyen de tension (20) dans la fente (44), **caractérisé en ce que** l'élément adaptateur (22) présente une ouverture de passage (28) qui forme un moyen de fixation pour une pièce rapportée (30).

2. Dispositif de fixation et de tension selon la revendication 1, **caractérisé en ce que** la fente (44) s'étend axialement à partir d'une face frontale (39) du corps de base (18) sur une longueur partielle (Lᵢ) du corps de base (18), la fente (44) étant en particulier conique à partir de la face frontale (39) du corps de base (18).

3. Dispositif de fixation et de tension selon la revendication 1 ou 2, **caractérisé en ce que** le corps de base (18) présente une deuxième fente (44), qui est de préférence diamétralement opposée à la première fente (44), et **en ce que** l'élément adaptateur (22), dans un état monté sur le corps de base (18), ferme au moins partiellement les deux fentes sur le corps de base (18).

4. Dispositif de fixation et de tension selon l'une des revendications précédentes, **caractérisé en ce que** le corps de base (18) présente un filet extérieur (40) et l'élément adaptateur (22) un filet intérieur (34), l'élément adaptateur (22) étant apte à être vissé sur le filet extérieur (40) du corps de base (18) au moyen du filet intérieur (34).

5. Dispositif de fixation et de tension selon l'une des revendications précédentes, **caractérisé en ce que** le moyen de tension (20) traverse axialement l'élément adaptateur (22).

6. Dispositif de fixation et de tension selon l'une des revendications précédentes, **caractérisé en ce que** le corps de base (18) ou l'élément adaptateur (22) présente sur une face frontale une barrette (42) axialement en saillie.

7. Dispositif de fixation et de tension selon l'une des revendications précédentes, **caractérisé en ce que** l'ouverture de passage (60) est agencée de manière centrée.

8. Dispositif de fixation et de tension selon l'une des revendications précédentes, **caractérisé en ce que** le corps de base (18) présente sur la face intérieure, dans la zone de la fente (44), une surépaisseur (88) qui s'étend sur toute la longueur de la fente (44).

9. Dispositif de fixation et de tension selon l'une des revendications précédentes, **caractérisé en ce que** l'élément adaptateur (22), à l'état monté, serre le moyen de tension (20) dans la fente (44), s'étend en particulier latéralement à la face extérieure du corps de base (18), au-delà du corps de base (18), et recouvre une partie de la fente (44).

10. Dispositif de fixation et de tension selon l'une des revendications précédentes, **caractérisé en ce que** le moyen de tension (20) présente du côté d'extrémité un moyen de fixation (70) qui est fixé de manière non détachable au moyen de tension (20).

11. Dispositif de fixation et de tension selon l'une des revendications précédentes, **caractérisé en ce qu'**une unité de serrage (46) est agencée du côté extérieur sur le corps de base (18), en particulier formée d'un seul tenant, et est réalisée de manière à empêcher un mouvement du moyen de tension (20) dans le sens longitudinal.

12. Dispositif de fixation et de tension selon la revendication 11, l'unité de serrage (46) présentant une rainure de serrage (48) dans laquelle le moyen de tension (20) peut être sélectivement introduit pour y être serré, la rainure de serrage (48), dans une vue latérale, étant en particulier adjacente à la fente (44) et orientée vers celle-ci.

13. Système modulaire comprenant un dispositif de fixation et de tension (16) selon l'une des revendications précédentes et un autre élément adaptateur (62),
l'une des pièces rapportées (30) suivantes étant agencée sur chaque élément adaptateur (22, 62) : un crochet (32), une ventouse (74), un aimant (80), un mousqueton, une plaque à oeillet, une vis à oeil, une pince, un crochet tournant, une bande Velcro (78), une pièce rapportée filetée (83) ou un renflement (75) présentant une ouverture latérale (76) à travers laquelle un élément de fixation en forme de tige peut être guidé.

14. Système modulaire selon la revendication 13, **caractérisé en ce que** l'un des éléments adaptateurs (22, 62) présente un filet extérieur (40) et l'autre élément adaptateur (62, 22) un filet intérieur (34), l'élément adaptateur (22, 62) étant apte à être vissé sur l'autre élément adaptateur (62, 22).
